# EUROPÄISCHE PATENTSCHRIFT

(11) **EP 0 268 022 B1**
(45) Veröffentlichungstag und Bekanntmachung des Hinweises auf die Patenterteilung: **20.01.1993**
(21) Anmeldenummer: 87111799.0
(22) Anmeldetag: 14.08.1987
(51) Int. Cl.: H02G 3/12

(54) **Einbaudose, insbesondere Unterputzdose**
Fitted box, especially flush-mountable into the plaster
Boîte encastrée, notamment noyée dans l'enduit

(30) Priorität: 20.11.1986 DE 3639514; 26.05.1987 DE 8707557 U; 26.05.1987 DE 3717776
(43) Veröffentlichungstag der Anmeldung: 25.05.1988
(73) Patentinhaber: Kaiser GmbH & Co. KG, D-58579 Schalksmühle (DE)
(72) Erfinder: Löbel, Helmut, 5885 Schalksmühle 1/Westfalen (DE)
(74) Vertreter: Buse, Karl Georg, Dipl.-Phys.

(56) Entgegenhaltungen:
- DE-A- 3 041 919
- DE-C- 592 056
- DE-U- 8 707 556
- DE-U- 8 707 557
- US-A- 2 482 281

## Beschreibung

Die Erfindung bezieht sich auf eine Einbaudose, insbesondere Unterputzdose für elektrische Inst-allationseinrichtungen, wie Schalter, Steckdosen, Kabelabzweigungen od.dgl. mit Halte- und/oder Abstützeinrichtungen zum Festlegen der Einbaudose an den Begrenzungswandungen einer Ausnehmung oder eines Durchbruches einer Wand.

Bei der Verlegung von Elektroinstallationen müssen häufig in Wandungen Ausnehmungen erzeugt werden, in die dann Einbaudosen unterzubringen sind, seien es nun Einzeleinbaudosen oder Dosenkombinationen. Diese Einbaudosen müssen in den erzeugten Ausnehmungen festgelegt werden. Dazu sind in der Praxis unterschiedliche Befestigungsmittel geschaffen worden, und es sind auch mannigfache Befestigungsarten entwickelt, die in Abhängigkeit von der Beschaffung der Ausnehmung und der Dose deren Lagesicherung in der Ausnehmung gewährleisten. Viele der in der Praxis gebräuchlichen Befestigungen von Dosen in Ausnehmungen setzen voraus, daß es sich bei der Einbaudose um eine Spezialeinbaudose handelt, d.h. um eine solche, bei der besondere Vorkehrungen getroffen werden müssen, um die Lagesicherung in der Ausnehmung zu gewährleisten. Durch derartige Spezialeinbaudosen wird nicht nur die Fertigung der Einbaudosen verteuert sondern auch die Lagerhaltung erschwert, weil eine Vielzahl solcher Einbaudosen auf Lager gehalten werden müssen, um allen in der Praxis vorkommenden Ansprüchen Rechnung zu tragen.

Besondere Probleme treten in der Praxis dann auf, wenn es darum geht, solche Einbaudosen in den Ausnehmungen einer Wand festzulegen, die an ihrer Außenseite Anschlußstutzen aufweisen. In diesem Falle müssen nämlich im Durchmesser sehr große Ausnehmungen in der Wand erzeugt werden, weil gewährleistet sein muß, daß die weit nach außen vorkragenden Anschlußstutzen der Einbaudose in der Ausnehmung Platz finden. Dadurch ist zwischen der Begrenzungswand der Ausnehmung einerseits und der Außenfläche der Einbaudose andererseits ein großer Abstand vorhanden, der durch die Verbindungsmittel überbrückt werden muß. Hinzu kommt, daß dieser Abstand-zwischen den genannten Teilen keineswegs konstant ist sondern auch die Art der Herstellung der Ausnehmung sehr großen Schwankungen unterliegt, insbesondere dann, wenn die Ausnehmungen von Hand aus geschaffen werden.

Durch die DE-A 3 o41 919 ist eine Hohlwanddose bekanntgeworden, die zur Aufnahme elektrischer Installationsgegenstände dient und von vorn in die Öffnung einer Wand einsetzbar ist. Diese bekannte Hohlwanddose hat einerseits einen Abstützflansch und andererseits durch Schrauben verstellbare Halteglieder, welche durch Anziehen der Schrauben aus einer Ruhelage in eine Arbeitslage überführt werden können. Eine Stützwand verschließt nach oben hin Führungsrinnen der Hohlwanddose.

Dabei ist diese Stützwand über eine Klemmlasche mit einer in jede Führungsrinne einsetzbare Keilmutter verbunden. Bei dieser Ausführungsform der Hohlwanddose handelt es sich um eine Spezialeinbaudose mit den schon geschilderten Nachteilen.

Bekannt ist auch ein Hohlwandkasten nach US-A 2 842 281. Dieser Kasten hat an zwei diametral gegenüberliegenden Seitenwandungen durch Befestigungsmittel, wie Nieten od.dgl., an seinem einen Ende festgelegte federnde Halter, deren vorderes Ende mehrfach abgewinkelt ist. Durch diese Abwinkelungen wird ein Aufnahmeraum zum Eingriff von Teilen des Begrenzungsrandes des Durchbruches der Wand geschaffen. Daher ist der Aufnahmeraum zur einen Seite hin offen. Nachteilig ist, daß eine Anpassung an unterschiedlich starke Wände bei dieser Ausführungsform der Haltemittel für einen Hohlwandkasten nicht möglich ist.

Und schließlich gibt es die Spreizbefestigung elektrischer Installationsapparate in Unterputzdosen nach DE-PS 592 o56. Diese Spreizbefestigung arbeitet mit gegen die Dosenwand sich abstützenden, federnden Gliedern, an denen bogenförmige oder teilscheibenartige Ansätze vorgesehen sind. Diese liegen auf dem Rand der Dose oder eines Sackloches auf und sollen sich bei eingesetztem Apparat etwa zu einem Ring bzw. zu einer Deckscheibe ergänzen. Diese Spreizbefestigung dient nicht zum Anbringen einer Hohlwanddose an einer Wand od.dgl. sondern zum Festlegen von Installationsapparaten im Inneren einer Unterputzdose.

Durch die vorliegende Erfindung soll ein Weg aufgezeigt werden, bei dem einmal handelsübliche Einbaudosen verwendet werden können und zum anderen die Lagesicherung einer solchen Einbaudose in einer Ausnehmung stets gewährleistet ist und zwar auch dann, wenn die Ausnehmungen, in denen solche Einbaudosen unterzubringen sind, in bezug auf ihre Durchmesser erheblichen Schwankungen unterliegen. Darüber hinaus soll die Lagesicherung einer handelsüblichen Einbaudose in einer Ausnehmung in einfacher Weise durchgeführt werden können, wobei beim Anbringen der Einbaudose an den Begrenzungswandungen der Ausnehmung weitgehend auf die Verwendung von Werkzeugen verzichtet werden soll.

Dieses Ziel ist erfindungsgemäß dadurch erreicht, daß der Einbaudose ein mit ihr verbindbarer Träger zugeordnet ist, der die Lagerung der Einbaudose übernimmt, daß die Lagerung durch Haltelaschen erfolgt, die während des Einschiebens der Einbaudose von einer horizontalen in eine vertikale Lage überführt werden, die mit den Begrenzungswnadungen einer Ausnehmung oder eines Durchbruches zusammenwirken und daß der Träger einen Auflageteil aufweist.

Bei der bevorzugten Ausführungsform der Erfindung weist der Träger einen auf den unteren Bereich des Hohlzylinders der Einbaudose aufsteckbaren Mittelteil, abbiegbare Haltelaschen und Verlängerungen mit je einem Auflageteil auf.

Die Erfindung hat zunächst den Vorteil, daß handelsübliche Einbaudosen Verwendung finden können. Dabei lassen sich sowohl einfache Einbaudosen als auch solche verwenden, die auf ihrer Außenseite mit Anschlußstutzen versehen sind, welche radial aus der Umfangsfläche herausragen. Vor dem Einbringen der Einbaudose in die Ausnehmung einer Wand wird sie mit einem erfindungsgemäßen Träger versehen. Dies kann durch einfaches Aufstecken des Trägers auf den Hohlzylinder der Einbaudose erfolgen, wobei bevorzugt ein Aufstecken auf den unteren Rand des Hohlzylinders vorgesehen ist. Von dem Träger braucht dabei nur ein verhältnismäßig kleiner Teil der Umfangsfläche des Hohlzylinders der Einbaudose erfaßt zu werden. Irgendwelche Werkzeuge sind beim Anbringen des Trägers an der Einbaudose nicht erforderlich. Vielmehr erfolgt ein einfachen Aufstecken. Der Träger wird dann durch eine Klemmkraft fest an der Dosenaußenfläche gehalten. Um dieses zu erreichen, lassen sich bei der Herstellung der Träger Werkstoffe mit elastischen Eigenschaften einsetzen. Die Haltelaschen des Trägers kommen mit benachbarten Begrenzungswandungen der Ausnehmung in Wirkverbindung, während die Verlängerungen mit ihrem Auflageteil auf solchen Wandteilen aufliegen, die der Ausnehmung unmittelbar benachbart sind. Der Auflageteil wird dabei so lang bemessen, daß auch größere Zwischenräume zwischen den Begrenzungswandungen der Ausnehmung einerseits und der Außenfläche der Einbaudose andererseits überbrückt werden können.

Es empfiehlt sich, den Träger einstückig auszubilden und ihn auf diametral gegenüberliegenden Seiten seines Mittelteiles je eine abbiegbare Haltelasche aufweisen zu lassen. Die Verlängerungen des Mittelteiles sind quer dazu angeordnet und die freien Enden sind zur Bildung je eines Auflageteiles nach außen hin abgewinkelt. Die einstückige Gestaltung des Trägers gewährleistet eine wirtschaftliche Herstellung. Dabei werden als Werkstoffe vorzugsweise solche eingesetzt, die elektrisch isolierend sind und dabei elastische Eigenschaften haben. Die Haltelasche des Trägers kann aus ihrer horizontalen Grundebene um etwa 9o° nach oben abgebogen werden. Auf diese Weise kommen sie - wie gewollt - mit den Begrenzungswandungen der Ausnehmung in Wirkverbindung. Demgegenüber sind die Verlängerungen quer zur Grundebene der Haltelasche angeordnet. Sie erstrecken sich im wesentlichen über die gesamte Höhe einer handelsüblichen Einbaudose. Die freien Enden jeder Verlängerung sind nach außen hin abgewinkelt und zwar derart, daß verhältnismäßig lange Auflageteile entstehen, durch welche auch größere Zwischenräume zwischen der Einbaudose und der Begrenzungswand der Ausnehmungen überbrückt werden können.

Es empfiehlt sich, die Haltelaschen über je ein Filmscharnier mit dem Mittelteil des Trägers zu verbinden. Auf diese Weise ist mit geringstem Aufwand eine gelenkige Verbindung zwischen den Haltelaschen einerseits und dem Mittelteil des Trägers andererseits geschaffen. Beim Einbringen der Einbaudose in die Ausnehmung werden kann die Haltelaschen aus ihrer Ruhelage in ihre etwa senkrecht dazu liegende Arbeitslage überführt.

Es empfiehlt sich, die Haltelasche des Trägers Seitenstege aufweisen zu lassen, die an ihrem einem Ende jeweils ein Filmscharnier aufweisen und an ihrem entgegengesetzt liegenden anderen Ende durch einen Quersteg miteinander verbunden sind, wobei zwischen den Seitenstegen ein Durchbruch angeordnet ist.

Dabei ist es zweckmäßig, wenn der Quersteg der Haltelasche auf seiner mit der Begrenzungswandung der Ausnehmung der Wand zusammenwirkenden Seite Haltevorsprünge aufweist.

Dabei wird vorgeschlagen, daß der Quersteg der Haltelasche eine Vielzahl von Haltevorsprüngen aufweist, die in zwei Gruppen angeordnet sind, wobei diese beiden Gruppen durch eine mittig angeordnete Auswölbung voneinander getrennt sind. Durch die Vielzahl der Haltevorsprünge wird zunächst eine gute Haltekraft zwischen dem Träger einerseits und der Begrenzungswand der Ausnehmung andererseits erzielt. Aus herstellungstechnischen Gründen empfiehlt es sich dabei, die Haltevorsprünge untereinander gleich zu gestalten und sie in regelmäßiger Anordnung auf der einen Seite der Haltelasche anzubringen. Die Auswölbung des Quersteges erleichtert dabei das Überführen der Haltelasche aus ihrer ebenen Ruhelage in ihre gekrümmte Arbeitslage.

Dabei ist es zweckmäßig, die äußere Begrenzungskante des Quersteges gekrümmt auszubilden, derart, daß der Krümmungsmittelpunkt mit dem Mittelpunkt des Mittelteiles des Trägers zusammenfällt.

Nach einem weiteren Vorschlag der Erfindung weist der Auflageteil der Verlängerung des Trägers in seinem ebenen Mittelbereich liegend ein Loch zum Durchgriff eines Befestigungselementes auf. Sofern erforderlich, kann somit durch Anbringen eines Befestigungselementes eine zusätzliche Lagesicherung der Einbaudose geschaffen werden. In der Regel kann aber auf eine solche zusätzliche Befestigung verzichtet werden.

Es empfiehlt sich, die Verlängerung an demjenigen Bereich des Mittelteiles des Trägers anzuordnen, der zwischen den Seitenstegen bzw. den Filmscharnieren der Haltelasche liegt.

Nach einem weiteren Vorschlag der Erfindung weist der Mittelteil des Trägers auf zwei diametral gegenüberliegenden Seiten je eine Abflachung auf, in deren Bereich eine Ausnehmung liegt, deren seitliche Begrenzungswände nach dem Anbringen des Trägers mit den Außenwänden von Anschlußstutzen der Einbaudose lagesichernd zusammenwirken. Die Abmessungen einer solchen Ausnehmung sind dabei denjenigen von Anschlußstutzen handelsüblicher Einbaudosen angepaßt. Auf diese Weise kann eine einfache Drehsicherung des Trägers auf dem Hohlzylindermantel der Einbaudose erzielt werden.

Bei der bisher angeführten Ausführungsform des Trägers ist unterstellt, daß er auf diametral gegenüberliegenden Seiten je eine Verlängerung aufweist, die quer zum Träger und damit in Richtung der Längsachase der Einbaudose verläuft. Die Verlängerung ist dabei so lang bemessen, daß sie in etwa der Höhe der Einbaudose entspricht. Auf diese Weise entsteht ein verhältnismäßig großvolumiger Körper, der für seine Lagerung und seinen Transport erheblichen Platz benötigt. Darüber hinaus ist bei der bisher angegebenen Ausführungsform dem Träger jeweils nur ein Paar von Verlängerungen zugeordnet, die auf diametral gegenüberliegenden Seiten angeordnet sind.

Nachfolgend wird eine Ausführungsform des Trägers angegeben, die weniger voluminös und sperrig ist und daher für Transport- und Lagerzwecke im Vergleich mit der bisher berücksichtigten Ausführungsform weniger Platz benötigt. Ferner wird bei der nachfolgend zu nennenden Ausführungsform die Klemmkraft der Haltelaschen vergrößert und die Auflagefläche im Bereich der Verlängerung erweitert.

Bei dieser abgeänderten Ausführungsform setzen sich die Auflageteile des Trägers jeweils aus einer Verlängerung und einer quer dazu angeordneten Auflagefläche zusammen. Dabei sind die Auflageteile mit bezug auf den Mittelteil des Trägers abbiegbar. Eine solche abgeänderte Ausführungsform des Trägers benötigt für Lager- und Transportzwecke viel weniger Platz als die zuerst angegebene. Diese deshalb, weil alle wesentlichen Teile des Trägers bis auf die am äußersten Ende liegenden kurzen Halteteile in der Ruhelage des Trägers alle in ein und derselben Ebene, nämlich der Grundebene, liegen. Dies bedeutet, daß die Verlängerungen in der Ruhelage des Trägers nicht mehr - wie bei der erstbeschriebenen Ausführungsform - in Richtung der Längsachse der Einbaudose verlaufen sondern quer dazu. Erst beim bestimmungsgemäßen Gebrauch des Trägers erfolgt ein Umlegen der Verlängerungen um etwa 9o° aus der Ruhelage heraus, so daß dann die Verlängerungen in Richtung der Längsachse der Einbaudose verlaufen.

Es empfiehlt sich, die Verlängerung einerends über ein Filmscharnier mit dem Mittelteil des Trägers zu verbinden und andernends eine etwa senkrecht zu ihr angeordnete Auflagefläche aufweisen zu lassen.

Zweckmäßig ist die Paarweise Anordnung von zwei Verlängerungen, die durch einen Durchbruch voneinander getrennt, an ihren freien Enden jedoch durch einen Steg miteinander verbunden sind, wobei der Steg an seiner Außenkante liegend zwei im Abstand voneinander angeordnete Auflageflächen aufweist. Bei dieser Anordnung ist im Vergleich mit der zuerst angegebenen Ausführungsform des Trägers eine Verdoppelung der Anzahl der Verlängerungen und der ihnen zugeordneten Halteflächen vorgesehen.

Die Verlängerungen haben dabei zweckmäßig auf ihrer einen Seite vorzugsweise in Gruppen angeordnete Haltevorsprünge.

Es empfiehlt sich, den Mittelteil des Trägers Haltelaschen aufweise zu lassen, die auf diametral gegenüberliegenden Seiten gruppenweise angeordnet sind, wobei jede Gruppe aus schmalen und breiteren Haltelaschen besteht.

Bei der bevorzugten Ausführungsform der Erfindung besteht jede Haltelaschengruppe aus zwei schmalen und einer breiten Haltelasche, wobei die breite Haltelasche in den Durchbruch zwischen den Verlängerungen hineinragt, während die schmalen Haltelaschen seitlich neben den Verlängerungen liegen. Durch die große Anzahl der benutzten Haltelaschen und durch ihre unterschiedliche Ausbildung erhält die Einbaudose an den Begrenzungswandungen des Durchbruches oder der Ausnehmung einen sehr guten Halt.

Es hat sich in der Praxis herausgestellt, daß es nicht in allen Fällen erforderlich ist, einen gesondert hergestellten Träger für die Einbaudose zu benutzen, der dann in einem besonderen Arbeitsgang mit der Umfangsfläche der Einbaudose zu verbinden ist. Vielmehr kann es in Sonderfällen von Vorteil sein, auf die Verwendung handelsüblicher Einbaudosen und auf die Zuordnung eines gesonderten Trägers zu verzichten.

Für diese Sonderfälle liegt der Erfindung die weitere Aufgabe zugrunde, Einbaudosen derart zu verbessern, daß sie in wirtschaftlicher Weise hergestellt werden können, dabei aber die Vorteile der Ausführungsform mit den zugeordneten Trägern aufweisen, d.h. derartige Dosen sollen nach wie vor in einfacher Weise an den Begrenzungswandungen einer Ausnehmung oder eines Durchbruches einer Wand angebracht werden können, wobei die Halteteile der Dose ebenfalls in der Lage sein sollen, größere Abstände zwischen den äußeren Begrenzungswandungen der Ausnehmung und der Dose zu überbrücken. Für die Lösung dieser Aufgabe wird vorgeschlagen, die Haltelasche und den Auflageteil unter Fortfall eines Trägers der als Hohlzylinder ausgebildeten Umfangsfläche der Einbaudose unmittelbar anzuformen. Bei dieser Gestaltung der Einbaudose wird zwar auf die Verwendung handelsüblicher Einbaudosen verzichtet. Dafür kommt aber ein separat hergestellter und in einem zusätzlichen Arbeitsgang mit der Einbaudose verbindbarer Träger in Fortfall. Insgesamt gesehen kann also die mit Haltelaschen und Auflageteilen versehene Einbaudose gemäß diesem Vorschlag der Erfindung wirtschaftlich hergestellt werden. Dabei hat man es in der Hand, den Hohlzylinder der Einbaudose unterschiedlich zu gestalten. Neben glattwandigen Hohlzylindern, die auf ihrer Umfangsfläche lediglich ausbrechbare Wandungsteile zum Einführen von Leitungen, Kabeln und dergl. aufweisen, können auch solche eingesetzt werden, die auf diametral gegenüberliegenden Seiten Anschlußstutzen aufweisen und bei denen daher die Möglichkeit gegeben ist, mehrere Einbaudosen zu Dosenkombinationen zu verbinden.

Der Hersteller derartiger Dosen hat es somit in der Hand, je nach den vorhandenen Verhältnissen bzw. nach den Wünschen der Käufer entweder handelsübliche Dosen zu schaffen, die dann nachträglich mit einer Ausführungsform des genannten Trägers verbunden werden oder abver von vornherein eine Spezialdose zu schaffen, die mit Halte-und Auflageteilen ausgerüstet ist. In allen Fällen steht dem Benutzer eine Einbaudose zur Verfügung, die in einfacher Weise in eine Ausnehmung einer Wand oder in einen Durchbruch derselben eingesetzt werden kann und durch die vorhandenen Haltelaschen fest mit den Begrenzungswandungen des Durchbruches verbunden ist.

Auf der Zeichnung ist die Erfindung in mehreren Ausführungsbeispielen dargestellt und zwar zeigen:
- Fig. 1: eine Draufsicht auf den erfindungsgemäßen Träger,
- Fig. 2: eine Seitenansicht des Trägers gemäß der Fig. 1,
- Fig. 3: eine Stirnansicht des Trägers gemäß den Fig. 1 und 2,
- Fig. 4: einen Schnitt durch den Träger gemäß der Fig. 1 entlang der Linie IV-IV,
- Fig. 5: im verkleinerten Maßstab und in Seitenansicht den erfindungsgemäßen Träger, angebracht an einer mit Anschlußstutzen versehenen Einbaudose,
- Fig. 6: in Draufsicht eine mit einer Ausnehmung versehene Wand, vor der eine mit einem erfindungsgemäßen Träger ausgestattete Einbaudose angeordnet ist und zwar vor dem Einführen in die Ausnehmung,
- Fig. 7: eine der Fig. 6 entsprechende Darstellung der Einbaudose mit Träger, jedoch nach dem Einführen des Trägers mit der Einbaudose in eine Ausnehmung einer Wand,
- Fig. 8: eine Draufsicht auf eine zweite Ausführungsform des erfindungsgemäßen Trägers,
- Fig. 9: eine Seitenansicht des Trägers gemäß der Fig. 8 der Zeichnung,

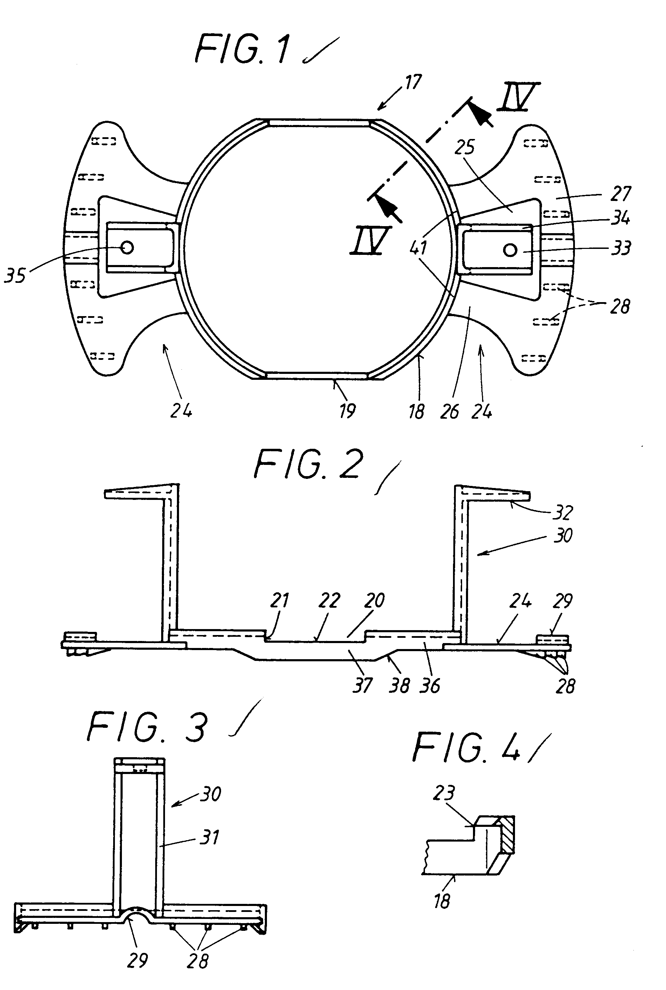

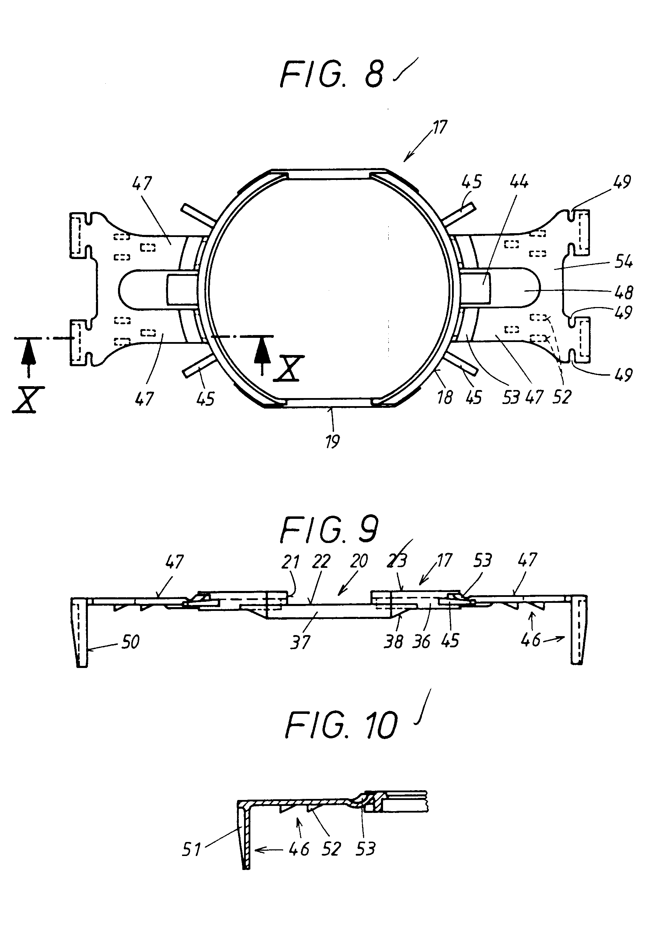

- Fig. 1o: einen Teilschnitt durch den Träger gemäß den Fig. 8 und 9, teilweise weggebrochen,

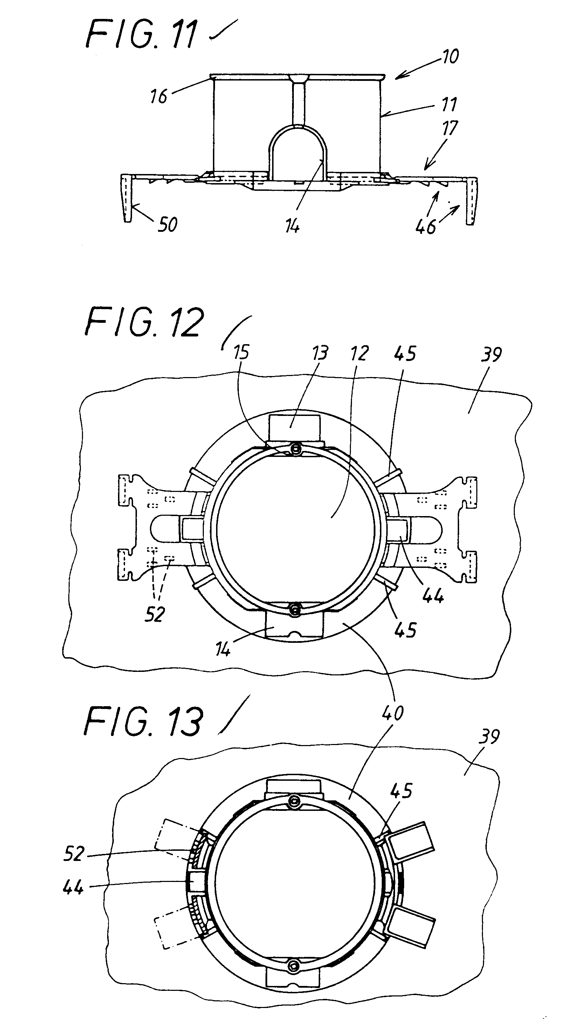

- Fig. 11: im verkleinerten Maßstab und in Seitenansicht die zweite Ausführungsform des erfindungsgemäßen Trägers, angebracht an einer mit Anschlußstutzen versehenen Einbaudose,
- Fig. 12: in Draufsicht gesehen eine mit einer Ausnehmung versehene Wand, vor der eine mit der zweiten Ausführungsform des erfindungsgemäßen Trägers ausgestattete Einbaudose angeordnet ist und zwar vor dem Einführen der Einbaudose und des Trägers in die Ausnehmung,
- Fig. 13: eine der Fig. 12 entsprechende Darstellung der Einbaudose mit Träger, jedoch nach dem Einführen des Trägers mit der Einbaudose in eine Ausnehmung einer Wand, teilsweise geschnitten,

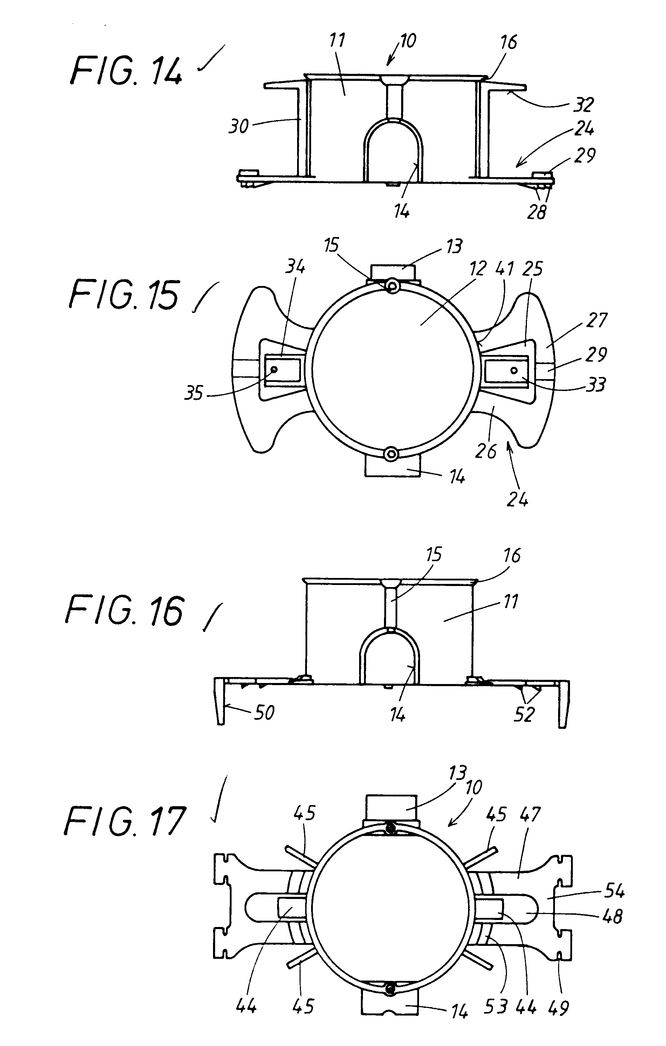

- Fig. 14: in Seitenansicht eine dritte Ausführungsform der erfindungsgemäß ausgebildeten Einbaudose, bei der die Haltelaschen und der Auflageteil der Umfangsfläche der Einbaudose unmittelbar angeformt sind,
- Fig. 15: eine Draufsicht auf die Einbaudose gemäß der Fig. 14 der Zeichnung,
- Fig. 16: eine vierte Ausführungsform der Einbaudose in Seitenansicht, bei der ebenfalls die Haltelaschen und der Auflageteil der Umfangsfläche dieser Einbaudose unmittelbar angeformt sind und
- Fig. 17: eine Draufsicht auf die Einbaudose gemäß der Fig. 16.

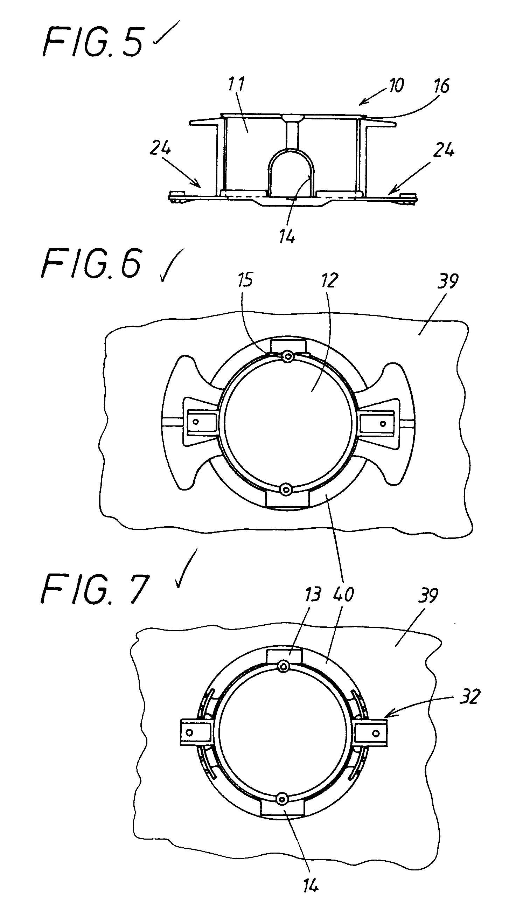

Es sei zunächst erwähnt, daß die erfindungsgemäßen Träger bei Einbaudosen an sich bekannter Art Verwendung finden können. Dabei können sowohl normale Einbaudosen als auch solche Verwendung finden, die auf ihrer Außenfläche mit Anschlußstutzen versehen sind, um so die Möglichkeit zu schaffen, mehrere solcher Einbaudosen zu einer Dosenkombination zusammenzusetzen. In dem Ausführungsbeispiel gemäß den Fig. 5 bis 7 der Zeichnung ist eine Einbaudose bekannter Bauart zugrundegelegt. Es handelt sich hierbei um eine Unterputzdose für elektrische Installationsreinrichtungen, wie Schalter, Steckdosen, Kabelabzweigungen od.dgl. mit einer geraden Anzahl von am Außenmantel der Einbaudose angeordneten Anschlußstutzen. Wie insbesondere aus der Fig. 5 der Zeichnung ersichtlich, besteht eine solche Einbaudose aus einem Hohlzylinder 11, der einseitig durch einen Boden 12 verschlossen ist. Am Außenmantel des Hohlzylinders 11 sind an zwei diametral gegenüberliegenden Seiten nicht näher bezeichnete Abflachungen vorgesehen, an denen Anschlußstutzen 13 und 14 liegen. Dabei ist der Anschlußstutzen 13 patrizen-und der Anschlußstutzen 14 matrizenförmig gestaltet.

Wie die Fig. 5 erkennen läßt, sind die Anschlußstutzen im Querschnitt gesehen tunnelförmig gestaltet, wobei ihr Tunnelboden eben ausgebildet ist. Der Tunnelboden des matrizenförmigen Anschlußstutzens 14 liegt in der Ebene des Bodens 12 des Hohlzylinders 11, während der Tunnelboden des patrizenförmigen Anschlußstutzens 13 zum Boden 12 des Hohlzylinders 11 um ein Maß versetzt ist, das der Dicke des Tunnelbodens des matrizenförmigen Anschlußstutzens 14 entspricht.

An der Unterseite des Tunnelbodens des patrizenförmigen Anschlußstutzens 13 ist in bekannter Weise eine Rastnase vorgesehen, die widerhakenförmig ausgebildet ist. Demgegenüber weist der Tunnelboden des matrizenförmigen Anschlußstutzens 14 eine als Gegenrast ausgebildete Öffnung auf. In diese Öffnung greift die Rastnase des patrizenförmigen Anschlußstutzens ein, so daß auf einfache Weise ein Zusammenkuppeln mehrerer Einbaudosen 1o möglich ist.

Um die Einbaudose 1o in der Ausnehmung oder dem Durchbruch 4o einer Wand 39 lagegesichert befestigen zu können, dient der generell mit 17 bezeichnete erfindungsgemäße Träger, dessen Ausbildung in einer ersten Ausführungsform am besten aus den Fig. 1 und 2 der Zeichnung ersichtlich ist. Es handelt sich dabei um einen einstückig aus einem der in der Elektroindustrie gebräuchlichen Isolierstoffe gefertigten Körper, der einen Mittelteil 18 aufweist, welcher im Querschnitt kreisrund gehalten ist, wobei jedoch auf zwei diametral gegenüberliegenden Seiten je eine Abflachung 19 vorhanden ist. Im Bereich dieser Abflachung 19 ist eine Ausnehmung 2o angeordnet, die seitliche Begrenzungswandungen 21 aufweist. Der Grund der Ausnehmung 2o ist mit 22 bezeichnet. Die Breitenabmessungen der Ausnehmung 2o sind dabei denjenigen der Anschlußstutzen 13 bzw. 14 der Einbaudose 1o angepaßt. Der Mittelteil 18 des Trägers 17 hat einen hochgezogenen Rand 23, der nach dem Aufstecken bzw. Aufschieben des Trägers 17 auf den unteren Bereich des Hohlzylinders 11 der Einbaudose 1o den Träger klemmend an der Einbaudose 1o festhält. Eine Drehsicherung des Trägers 17 auf dem Hohlzylinder 11 der Einbaudose 1o wird einerseits durch die Abflachungen 19 und andererseits durch das Zusammenwirken der seitlichen Begrenzungswandungen 21 der Ausnehmung 2o mit den Außenwänden der Anschlußstutzen 13 bzw. 14 erzielt. Die Seitenwände des Mittelteiles 18 des Trägers 17 sind mit 36 bezeichnet. Diese Seitenwand 36 geht über ein schräges Verbindungsstück 38 in den Seitenwandteil 37 über, der unterhalb der Ausnehmung 22 liegt, so wie dies in der Fig. 2 der Zeichnung ersichtlich ist.

Jeweils um 9o° zu den Abflachungen 19 des Mittelteiles 18 versetzt sind am letzteren auf diametral gegenüberliegenden Seiten abbiegbare Haltelaschen 24 angeordnet. Beide Haltelaschen sind untereinander gleichgestaltet. Sie liegen in ihrer Ruhelage in der Horizontalen, so wie dies die Fig. 1 und 2 der Zeichnungen veranschaulichen. Jede Haltelasche hat Seitenstege 26, die nach außen hin divergieren und deren Enden durch einen Quersteg 27 miteinander verbunden sind. Dieser Quersteg 27 hat eine gekrümmte Außenfläche, wobei der Mittelpunkt der Krümmung zusammenfällt mit dem Mittelpunkt des Mittelteiles 18 des Trägers 17. Auf seiner Unterseite sind dem Quersteg 27 Haltevorsprünge 28 angeformt, die im Querschnitt gesehen keilförmig gestaltet sind, derart, daß die größte Erhebung jedes Keiles außen liegt, also in unmittelbarer Nähe der Begrenzungskante des Quersteges 27. Es sind eine Vielzahl solcher Haltevorsprünge 28 vorgesehen, die alle untereinander gleichgestaltet sind und die in regelmäßiger Anordnung auf der unteren Fläche des Quersteges 27 liegen. In seiner Mitte hat der Quersteg 27 eine Auswölbung 29 von etwa halbkreisförmigem Querschnitt. Diese Anordnung ist gewählt, um beim bestimmungsgemäßen Gebrauch das Überführen der Haltelasche 24 aus der in der Fig. 1 dargestellten ebenen Lage in die gekrümmte Lage gemäß Fig. 7 der Zeichnung zu erleichtern. Um dabei das Abbiegen der Haltelaschen 24 weiter zu erleichtern, sind deren Seitenstege 26 über Filmscharniere 41 mit der Außenfläche des Mittelteiles 28 des Trägers 17 verbunden. Zwischen den beiden Seitenstegen 26 ist ein Durchbruch 25 vorgesehen. Ferner liegt zwischen den beiden Seitenstegen 29 eine Verlängerung 3o, die - wie die Fig. 2 veranschaulicht - quer zum Mittelteil 18 des Trägers 17 verläuft und damit in Richtung der Längsachse der Einbaudose 1o, mit welcher der Träger 17 zusammenwirken soll. Die Verlängerung 3o ist etwa so lang bemessen wie die Höhe der mit ihr zusammenwirkenden Einbaudose, Jede Verlängerung hat an ihren Außenseiten liegend Versteifungsrippen 31, die einen ebenen Mittelteil zwischen sich einschließen.

Das äußere freie Ende jeder Verlängerung 3o ist um 9o° nach außen abgewinkelt, so daß Auflageteile 32 entstehen. Diese haben an ihrer Oberfläche liegend hochgezogene Begrenzungswandungen 34, die einen ebenen Mittelteil 33 zwischen sich einschließen. In dem ebenenen Mittelteil 33 jedes Auflageteiles 32 ist ein Loch 35 vorgesehen, durch welches bei Bedarf ein handelsübliches Befestigungselement, wie ein Nagel od.dgl. hindurchgetrieben werden kann.

In der Fig. 5 der Zeichnung ist die erste Ausführungsform des erfindungsgemäßen Trägers 17 auf den unteren Bereich des Hohlzylinders 11 aufgeschoben. Dabei kommen einerseits die Innenwandungen der hochgezogenen Ränder 23 des Mittelteiles 18 des Trägers 17 mit den benachbarten Teilen des Hohlzylinders in Wirkverbindung. Außerdem legen sich die seitlichen Begrenzungswandungen 21 der Ausnehmung 2o an die Außenwände der Anschlußstutzen 13 bzw. 14 der Einbaudose 1o an. Die beiden Haltelaschen 24 stehen nach dem Anbringen des Trägers 17 auf dem Hohlzylinder 11 der Einbaudose 1o nach außen hin ab und liegen zunächst parallel zu den Auflageteilen 32, so wie dies die Fig. 5 der Zeichnung veranschaulicht. Die so mit einem Träger 17 versehene Einbaudose 1o wird dann über die Ausnehmung 4o einer Wand 39 gelegt, wie dies in der Fig. 6 wiedergegeben ist. Dabei ist der Durchmesser der Ausnehmung 4o derart bemessen, daß in ihr auch die Anschlußstutzen 13 bzw. 14 Platz finden. In der in Fig. 6 wiedergegebenen Lage liegen die Haltelaschen 24 noch auf Bereichen der Wand 39 auf. Wenn man dann z. B. Mittels der Hand auf den Boden 12 der Einbaudose 1o eine Kraft ausübt und zwar in Richtung auf den Grund der Ausnehmung 4o, dann wird die Einbaudose 1o in die Ausnehmung 4o der Wand 39 eingeschoben. Dabei verändern die Haltelaschen 24 fortlaufend ihre Lage, bis sie aus der in der Fig. 6 dargestellten horizontalen in die vertikale Lage gemäß der Fig. 7 überführt sind. Eine solche Bewegung wird durch die Anbringung der Filmscharniere 21 im Bereich der Enden der Querstege 26 der Haltelaschen 24 möglich. In der Endlage kommen dann die Haltevorsprünge 28 des Quersteges 27 der Haltelasche 24 mit den benachbarten Begrenzungswandungen der Ausnehmung 4o in Wirkverbindung und sorgen für eine Lagesicherung der Einbaudose 1o innerhalb der Ausnehmung 4o.

Wie die Fig. 7 ferner erkennen läßt, wird der verhältnismäßig große Zwischenraum zwischen der Außenfläche des Hohlzylinders 11 der Einbaudose 1o und der Begrenzungswand der Ausnehmung 4o durch die beiden Auflageteile 32 ohne weiteres überbrückt. Die Löcher 35 liegen dabei noch oberhalb der Wand 39, so daß man bei Bedarf durch sie hindurch Nägel oder andere Befestigungselemente treiben kann, um - sofern gewünscht - eine weitere Lagesicherung der Einbaudose 1o zu erzielen.

Nachzutragen bleibt noch, daß in dem gewählten Ausführungsbeispiel die Einbaudose oberhalb der Anschlußstutzen domartige Vorsprünge 15 aufweist, die in bekannter Weise mit Befestigungsmitteln, wie Schrauben, zusammenwirken, um z.B. einen Tragring od.dgl. an der Einbaudose festhalten zu können. Diese Vorsprünge enden in Höhe eines nach außen zeigenden umlaufenden Flansches 16 der Einbaudose 1o.

In den Fig. 8 bis 1o der Zeichnung ist eine zweite Ausführungsform eines Trägers 17 wiedergegeben, der wiederum mit einer Einbaudose 1o verbunden werden kann. Soweit der Träger 17 und die Einbaudose 1o unverändert geblieben sind, wurden gleiche Bezugszeichen verwendet.

Wie aus der Fig. 8 der Zeichnung hervorgeht, hat der Träger 17 bei dieser Ausführungsform jeweils um 9o° zu den Abflachungen 19 seines Mittelteiles 18 versetzt liegende, generell mit 46 bezeichnete Auflageteile, wobei sich jeder Auflageteil aus einer Verlängerung 47 und einer quer dazu angeordneten Auflagefläche 5o zusammensetzt. Wie die Fig. 9 der Zeichnung am besten erkennen läßt, liegen die Verlängerungen 47 in der unwirksamen Ruhelage des Trägers 17 in der Grundebene desselben, während nur die Auflageflächen 5o aus dieser herausragen, so daß sich insgesamt gesehen eine wenig voluminöse Gestaltung des Trägers 17 in der Ruhelage ergibt, was für Transport-und Lagerzwecke vorteilhaft ist.

In dem Ausführungsbeispiel nach den Fig. 8 bis 1o der Zeichnung ist eine Paarweise Anordnung der Verlängerungen 47 vorgesehen, d.h. es sind zwei Verlängerungen 47 vorhanden, die jeweils durch einen Durchbruch 48 voneinander getrennt sind. Die beiden Verlängerungen 47 sind an ihrem freien Ende durch einen Steg 54 miteinander verbunden. Der Steg 54 hat seinerseits an der Außenkante liegend die beiden in Abstand voneinander angeordneten Auflageflächen 5o, die quer zum Steg 54 bzw. zu den Verlängerungen 47 verlaufen. Im Bereich der Übergangsstelle vom Steg 54 zu den Auflageflächen 5o sind Schlitze 49 vorgesehen. Auch die Schlitze 49 sind Paarweise angeordnet. Sie sind aufeinander zugerichtet und lassen nur einen verhältnismäßig schmalen Materialbereich zwischen sich stehen.

Die Verlängerungen 47 haben auf ihrer Unterseite Haltevorsprünge 52, die gruppenweise angeordnet sind. Jeweils drei Haltevorsprünge 52 sind in einer Gruppe zusammengefaßt, wobei im Ausführungsbeispiel jeder Verlängerung 47 eine solche Gruppe von Haltevorsprüngen 52 zugeordnet ist. Jeder der Haltevorsprünge 52 ist im Querschnitt gesehen keil- oder sägezahnförmig gestaltet.

An ihrer dem Mittelteil 18 des Trägers zugekehrten Ende hat jede Verlängerung 47 ein Filmscharnier 53. Dies erleichtert das Aufrichten der Verlängerung 47 beim bestimmungsgemäßen Gebrauch des Trägers.

Die Auflageflächen 5o sind auf ihrer mit der Wand 39 zusammenwirkenden Seite eben gehalten, auf der gegenüberliegenden anderen Seite jedoch mit zwei Leisten 51 versehen, die im Bereich der seitlichen Begrenzungswandungen der Auflagefläche 5o angeordnet sind und sich zum freien Ende hin verjüngen. In dem Bereich zwischen den beiden Leisten 51 kann gewünschtenfalls auch eine Durchbrechung vorgesehen sein, um den Durchgriff eines Befestigungselementes, wie eines Nagels, zu erleichtern, wenn beabsichtigt sein sollte, die Einbaudose 1o an der Wand 39 noch durch zusätzliche Befestigungselemente lagezusichern.

Der Mittelteil 18 des Trägers 17 hat im Ausführungsbeispiel gemäß den Fig. 8 und 9 der Zeichnung Haltelaschen 44 bzw. 45. Diese liegen auf diametral gegenüberliegenden Seiten und sind ebenfalls gruppenweise angeordnet. Jede Gruppe besteht im Ausführungsformen aus schmalen und breiteren Haltelaschen. Im wiedergegebenen Ausführungsbeispiel sind zwei schmale Haltelaschen 45 vorgesehen, die jeweils seitlich neben einer der Verlängerungen 47 angeordnet sind. Die beiden Haltelaschen 45 sind untereinander gleichgestaltet und liegen, wie auch die breitere Haltelasche 44, zunächst in der Grundebene des Trägers. Die Haltelasche 44, die - wie gesagt - wesentlich breiter gehalten ist als die mit 45 bezeichneten, liegt in dem Durchbruch 48 zwischen den Verlängerungen 47. Die vorderen Enden der Haltelaschen 44 bzw. 45 kommen beim bestimmungsgemäßen Gebrauch des Trägers 17 mit den Begrenzungswandungen eines Durchbruches oder einer Ausnehmung 4o in der Wand in Wirkverbindung, was zur Folge hat, daß diese Haltelaschen 44 bzw. 45 aus ihrer horizontalen Lage in eine schräge bzw. geneigte Stellung umgebogen werden. Um dabei das Aufbiegen zu erleichtern, sind entweder filmscharnierartige Verbindungen mit dem Mittelteil 18 des Trägers 17 vorgesehen oder aber die Haltelaschen 44 bzw. 45 laufen in eine Spitze aus, verjüngen sich also von der Wurzel in Richtung Spitze.

Gemäß der Fig. 11 der Zeichnung ist die zweite Ausführungsform des Trägers 17 auf den unteren Bereich des Hohlzylinders 11 der Einbaudose 1o aufgeschoben. Diese geschieht in ähnlicher Weise wie in der Fig. 5 bei der ersten Ausführungsform des Trägers angegeben.

Bei der zweiten Ausführungsform des Trägers 17 liegen vor dem Einbringen der Einbaudose 1o in die Ausnehmung 4o der Wand 39 sowohl die Haltelaschen 44 bzw. 45 als auch die Verlängerungen 47 parallel zur Wandebene, vergl. dazu die Fig. 12 der Zeichnung. Wenn ausgehend von der Lage der Teile des Trägers 17 gemäß der Fig. 12 der Zeichnung auf den Boden der Einbaudose 1o eine Kraft ausgeübt wird und zwar in Richtung auf den Grund der Ausnehmung 4o, dann wird die Einbaudose in die Ausnehmung 4o der Wand 39 eingeschoben. Dabei verändern die Haltelaschen 44 bzw. 45 und die Verlängerungen 47 ständig ihre Lage, bis sie schließlich in ihre geneigte und im Grenzfall vertikale Lage gemäß der Fig. 13 überführt sind. Eine solche Bewegung bzw. ein solches Umbiegen wird durch die Benutzten Filmscharniere 53 erleichtert. In der in Fig. 13 wiedergegebenen Endlage kommen einmal die Haltevorsprünge 52 der Verlängerungen 47 und zum anderen auch die freien Enden der Haltelaschen 44 bzw. 45 mit den Begrenzungswandungen der Ausnehmung 4o in Wirkverbindung, wenn auch an räumlich voneinander getrennt liegenden Stellen und sorgen für eine gute Lagesicherung der Einbaudose 1o innerhalb der Ausnehmung 4o.

Bei den Ausführungsbeispielen der Einbaudose gemäß den Fig. 14 bis 17 wird auf die Verwendung eines Trägers 17 verzichtet. Statt dessen sind die Haltelaschen und die Auflageteile der als Hohlzylinder 11 ausgebildeten Umfangsfläche der Einbaudose 1o unmittelbar angeformt. Bei dem Ausführungsbeispiel der Einbaudose 1o nach den Fig. 14 und 15 entsprechen die Haltelaschen 24, die Verlängerung 3o und der Auflageteil 32 der Ausführungsform gemäß den Fig. 1 und 2 der Zeichnung, nur daß jetzt diese Teile nicht dem Mittelteil 18 des Trägers 17 sondern direkt der Umfangsfläche des Hohlzylinders 11 der Einbaudose 1o unmittelbar angeformt sind. Die Gestaltung der Haltelaschen und der Auflageteile hat sich somit nicht geändert.

Auch bei der Ausführungsform der Einbaudose nach den Fig. 16 und 17 der Zeichnungen sind die Haltelaschen und die Verlängerungen dem Hohlzylinder 11 der Einbaudose 1o unmittelbar angeformt. Jedoch entsprechen in diesem Falle die genannten Teile der Ausführungsform gemäß den Fig. 8 und 9, wiederum mit der Maßgabe, daß die Haltelaschen und die Verlängerungen nicht mehr dem Mittelteil 18 des Trägers 17 sondern direkt der Umfangsfläche des Hohlzylinders 11 der Einbaudose 1o angeformt sind. In beiden Fällen sind daher die Bezugszeichen aus den vorangegangenen Figuren übernommen worden.

Beim bestimmungsgemäßen Gebrauch der Einbaudosen 1o nach den Ausführungsformen gemäß den Fig. 14 bis 17 der Zeichnungen entfällt somit lediglich das Aufbringen des Trägers auf die Umfangsfläche der Einbaudose. Ansonsten erfolgt das Anbringen dieser Einbaudosen in der Ausnehmung oder dem Durchbruch 4o einer Wand 39 in der geschilderten Art und Weise.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere hinsichtlich der Gestalt der Haltelaschen und der Verlängerungen. Diese können auch in anderer als in der angegebenen Anzahl benutzt werden. Gleiches gilt auch für die Ausbildung der Haltevorsprünge, die auch eine andere als die dargestellte sägezahnartige Ausbildung erhalten können. Und schließlich können die Einbaudosen auch eine andere als die dargestellte Ausbildung erhalten. Insbesondere können auch Einbaudosen Benutzung finden, bei denen Anschlußstutzen 13 und 14 fehlen.

## Patentansprüche

1. Einbaudose, insbesondere Unterputzdose, für elektrische Installationseinrichtungen, wie Schalter, Steckdosen, Kabelabzweigdosen od.dgl., mit Halte- und/oder Abstützeinrichtungen zum Festlegen der Einbaudose (10) an den Begrenzungswandungen einer Ausnehmung oder eines Durchbruches einer Wand,
**dadurch gekennzeichnet,**
daß der Einbaudose (10) ein mit ihr verbindbarer Träger (17) zugeordnet ist, der die Lagerung der Einbaudose (10) übernimmt, daß die Lagerung durch Haltelaschen (24) erfolgt, die während des Einschiebens der Einbaudose (10) von einer horizontalen in eine vertikale Lage überführt werden, die mit den Begrenzungswandungen einer Ausnehmung oder eines Durchbruches (40) zusammenwirken, und daß der Träger (17) einen Auflageteil (32) aufweist.

2. Einbaudose nach Anspruch 1, dadurch gekennzeichnet, daß der Träger (17) einen auf den unteren Bereich des Hohlzylinders (11) der Einbaudose (1o) aufsteckbaren Mittelteil (18) abbiegbare Haltelaschen (24) und Verlängerungen (3o) mit je einem Auflageteil (32) aufweist.

3. Einbaudose nach Anspruch 1 und 2, dadurch gekennzeichnet, daß der Träger (17) einstückig ausgebildet ist und auf diametral gegenüberliegenden Seiten seines Mittelteiles (18) je eine abbiegbare Haltelasche (24) aufweist und daß die Verlängerungen (3o) des Mittelteiles (18) quer dazu angeordnet und ihre freien Enden zur Bildung je eines Auflageteiles (32) nach außen hin abgewinkelt sind.

4. Einbaudose nach Anspruch 3, dadurch gekennzeichnet, daß die Haltelaschen (24) über je ein Filmscharnier (41) mit dem Mittelteil (18) des Trägers (17) verbunden sind.

5. Einbaudose nach einem oder mehreren der vorangehenden Ansprüche, dadurch gekennzeichnet, daß die Haltelasche (24) des Trägers (17) Seitenstege (26) aufweist, die an ihrem einen Ende jeweils ein Filmscharnier (41) aufweisen und an ihren entgegengesetzt liegenden anderen Enden durch einen Quersteg (27) miteinander verbunden sind, wobei zwischen den Seitenstegen (26) ein Durchbruch (25) angeordnet ist.

6. Einbaudose nach Anspruch 5, dadurch gekennzeichnet, daß der Quersteg (27) der Haltelasche (24) auf seiner mit der Begrenzungswandung der Ausnehmung (4o) der Wand (39) zusammenwirkenden Seite Haltevorsprünge (28) aufweist.

7. Einbaudose nach Anspruch 6, dadurch gekennzeichnet, daß der Quersteg (27) der Haltelasche (24) eine Vielzahl von Haltevorsprüngen (28) aufweist, die in zwei Gruppen angeordnet sind, wobei diese beiden Gruppen durch eine mittig angeordnete Auswölbung (29) voneinander getrennt sind.

8. Einbaudose nach Anspruch 6 und 7, dadurch gekennzeichnet, daß die äußere Begrenzungskante des Quersteges (27) gekrümmt ausgebildet ist, derart, daß der Krümmungsmittelpunkt mit dem Mittelpunkt des Mittelteils (18) des Trägers (17) zusammenfällt.

9. Einbaudose nach Anspruch 1 und 3, dadurch gekennzeichnet, daß der Auflageteil (32) der Verlängerung (3o) des Trägers (17) in seinem ebenen Mittelbereich (33) liegend ein Loch (35) zum Durchgriff eines Befestigungselementes aufweist.

10. Einbaudose nach einem oder mehreren der vorangehenden Ansprüche, dadurch gekennzeichnet, daß die Verlängerung (3o) an demjenigen Bereich des Mittelteiles (18) des Trägers (17) angeordnet ist, der zwischen den Seitenstegen (26) bzw. den Filmscharnieren (41) der Haltelasche (24) liegt.

11. Einbaudose nach Anspruch 1 und 2, dadurch gekennzeichnet, daß der Mittelteil (18) des Trägers (17) auf zwei diametral gegenüberliegenden Seiten je eine Abflachung (19) aufweist, in deren Bereich eine Ausnehmung (2o) liegt, deren seitliche Begrenzungswände (21) nach dem Anbringen des Trägers (17) mit den Außenwänden von Anschlußstutzen (13, 14) der Einbaudose (1o) lagesichernd zusammenwirken.

12. Einbaudose nach Anspruch 1, dadurch gekennzeichnet, daß die Auflageteile (46) des Trägers (17) sich jeweils aus einer Verlängerung (47) und einer quer dazu angeordneten Auflagefläche (5o) zusammensetzen und daß die Auflageteile (46) mit bezug auf den Mittelteil (18) des Trägers (17) abbiegbar sind (Fig. 8 bis 13).

13. Einbaudose nach Anspruch 12, dadurch gekennzeichnet, daß die Verlängerung (47) einerends über ein Filmscharnier (53) mit dem Mittelteil (18) des Trägers (17) verbunden ist und andererends eine etwa senkrecht zu ihr angeordnete Auflagefläche (5o) aufweist.

14. Einbaudose nach Anspruch 12 und 13, gekennzeichnet durch die Paarweise Anordnung von zwei Verlängerungen (47), die durch einen Durchbruch (48) voneinander getrennt, an ihren freien Enden jedoch durch einen Steg (54) miteinander verbunden sind, wobei der Steg (54) an seiner Außenkante liegend zwei in Abstand voneinander angeordnete Auflageflächen (5o) aufweist.

15. Einbaudose nach einem oder mehreren der vorangehenden Ansprüche 12 bis 14, dadurch gekennzeichnet, daß die Verlängerungen (47) auf ihrer einen Seite vorzugsweise in Gruppen angeordnete Haltevorsprünge (52) aufweisen.

16. Einbaudose nach Anspruch 12, dadurch gekennzeichnet, daß der Mittelteil (18) des Trägers (17) Haltelaschen (44, 45) aufweist, die auf diametral gegenüberliegenden Seiten gruppenweise angeordnet sind, wobei jede Gruppe aus schmalen und breiteren Haltelaschen (45 bzw. 44) besteht.

17. Einbaudose nach Anspruch 16, dadurch gekennzeichnet, daß jede Haltelaschengruppe aus zwei schmalen und einer breiteren Haltelasche (45 bzw. 44) besteht, wobei die breite Haltelasche (44) in den Durchbruch (48) zwischen den Verlängerungen (47) hineinragt, während die schmalen Haltelaschen (45) seitlich neben den Verlängerungen (47) liegen.

18. Einbaudose nach Anspruch 1 und 12, dadurch gekennzeichnet, daß die Haltelaschen (24 bzw. 44, 45) und die Verlängerungen (32 bzw. 47) mit den Auflageteilen (32 bzw. 5o) unter Fortfall eines Trägers (17) der als Hohlzylinder (11) ausgebildeten Umfangsfläche der Einbaudose (1o) unmittelbar angeformt sind (Fig. 14 bis 17).

## Claims

1. A fitted box, in particular a flush mounted socket, for electrical installation devices such as switches, plug sockets, cable junction boxes or the like, with retaining devices and/or support devices for fixing the fitted box (10) to the boundary walls of a recess or an opening in a wall,
**characterised in that,**
associated with the fitted box (10) is a carrier (17) which can be connected to it and which is responsible for mounting the fitted box (10), that the mounting is done by means of retaining clips (24), which, when the fitted box (10) is being pushed in, are brought from a horizontal position into a vertical position, and which cooperate with the boundary walls of a recess or of an opening (40), and that the carrier (17) has a support portion (32).

2. A fitted box according to Claim 1, characterised in that the carrier (17) has a central portion (18) which can be plugged onto the lower region of the hollow cylinder (11) of the fitted box (10), flexible retaining clips (24) and extended portions (30) each with a support portion (32).

3. A fitted box according to Claims 1 and 2, characterised in that the carrier (17) is designed integrally and has a flexible retaining clip (24) on each of the diametrally oppositely disposed sides of its central portion (18), and that the extended portions (30) of the central portion (18) are arranged transversely thereto, and their free ends are angled outwardly to each form a support portion (32).

4. A fitted box according to Claim 3, characterised in that the retaining clips (24) are each joined to the central portion (18) of the carrier (17) by a covered hinge (41).

5. A fitted box according to one or more of the preceding claims, characterised in that the retaining clip (24) of the carrier (17) has side limb portions (26) which each have a covered hinge (41) at their one end, and which are joined together at the oppositely disposed other ends by a transverse limb portion (27), wherein an opening (25) is arranged between the lateral limb portions (26).

6. A fitted box according to Claim 5, characterised in that the transverse limb portion (27) of the retaining clip (24) has retaining projections (28) on the side which cooperates with the boundary wall of the recess (40) of the wall (39).

7. A fitted box according to Claim 6, characterised in that the transverse limb portion (27) of the retaining clip (24) has a plurality of retaining projections (28) which are arranged in two groups, wherein these two groups are separated from each other by a centrally arranged region of convex curvature (29).

8. A fitted box according to Claims 6 and 7, characterised in that the outer boundary edge of the transverse limb portion (27) is of a curved configuration in such a way that the central point of curvature coincides with the central point of the central portion (18) of the carrier (17).

9. A fitted box according to Claims 1 and 3, characterised in that the support portion (32) of the extended portion (30) of the carrier (17) has a hole (35) in its flat central region (33) for passage therethrough of a fixing element.

10. A fitted box according to one or more of the preceding claims, characterised in that the extended portion (30) is arranged in the region of the central portion (18) of the carrier (17) which is disposed between the side limb portions (26) and covered hinges (41) of the retaining clip (24).

11. A fitted box according to Claims 1 and 2, characterised in that the central portion (18) of the carrier (17) has a flattened portion (19) on each of two diametrally oppositely disposed sides, in which region a recess (20) is disposed, the lateral boundary walls (21) of which cooperate so that their position is kept, after the support (17) has been mounted with the outer walls of the connection pieces (13, 14) of the fitted box (10).

12. A fitted box according to Claim 1, characterised in that the support portions (46) of the carrier (17) are composed of an extended portion (47) and a support surface (50) arranged transversely thereto, and that the support portions (46) are flexible relative to the central portion (18) of the carrier (17) (Figures 8 to 13).

13. A fitted box according to Claim 12, characterised in that the extended portion (47) at one end is joined to the central portion (18) of the carrier (17) by a covered hinge (53), and at the other end has a support surface (50) which is substantially vertical thereto.

14. A fitted box according to Claims 12 and 13, characterised by the arrangement, in pairs, of two extended portions (47) which are separated from each other by an opening (48), but which are joined together at their free ends by a limb portion (54), wherein the limb portion (54) has two support surfaces (50), arranged at a spacing apart, on its outer edge.

15. A fitted box according to one or more of the preceding Claims 12 to 14, characterised in that the extended portions (47) have retaining projections (52) arranged in groups, preferably on their one side.

16. A fitted box according to Claim 12, characterised in that the central portion (18) of the carrier (17) has retaining clips (44, 45) which are arranged in groups on diametrally oppositely disposed sides, wherein each group consists of narrow and wider retaining clips (45 and 44).

17. A fitted box according to Claim 16, characterised in that each group of retaining clips consists of two narrow and one wider retaining clip (45 and 44), wherein the wide retaining clip (44) projects into the opening (48) between the extended portions (47), whilst the narrow retaining clips (45) are disposed at the side, next to the extended portions (47).

18. A fitted box according to Claim 1 and Claim 12, characterised in that the retaining clips (24 and 44, 45) and the extended portions (32 and 47) with the support portions (32 and 50) are formed, without a carrier (17), directly on the peripheral surface of the fitted box (10) in the form of a hollow cylinder (11) (Figures 14 to 17).

## Revendications

1. Boîte à encastrer, notamment dans le matériau de cloison, pour des distributeurs d'installations électriques, tels que des commutateurs, des prises, des boîtes de dérivation pour câbles électriques ou similaires, munis de dispositifs de retenue et/ou de support pour fixer rigidement la boîte à encastrer (10) aux parois limitant un évidement ou une perforation d'un mur, caractérisée en ce que la boîte encastrable (10) est associée à un support (17) auquel il est susceptible de se raccorder et qui assure l'appui de la boîte encastrable (10), en ce que l'appui est réalisé au moyen de languettes de maintien (24) qui sont déplacées lors de l'insertion de la boîte encastrable (10) d'une position horizontale vers une position verticale et qui coopèrent avec les parois de limitation d'un évidement ou une perforation (40), et en ce que le support (17) comporte une partie d'assise (32).

2. Boîte encastrable selon la revendication 1, caractérisée en ce que le support (17) est muni d'une partie centrale (18) susceptible de s'introduire sur la zone inférieure du cylindre creux (11) de la boîte encastrable (10), de languettes de maintien (24) susceptibles de se plier et, de prolongements (30) portant chacun une partie d'assise (32).

3. Boîte encastrable selon les revendications 1 et 2, caractérisée en ce que le support (17) est réalisé d'un seul tenant et comprend sur chacun des côtés diamétralement opposés de sa partie centrale (18), une languette de maintien (24) susceptible de se plier et en ce que les prolongements (30) de la partie centrale (18) sont disposés transversalement par rapport aux languettes, son extrémité libre étant pliée vers l'extérieur afin de constituer chacun une partie d'assise (32).

4. Boîte encastrable selon la revendication 3, caractérisée en ce que les languettes de maintien (24) sont reliées chacune à la partie centrale (18) du support (17) au moyen d'une charnière à bande.

5. Boîte encastrable selon une ou plusieurs des revendications précédentes caractérisée en ce que les languettes de maintien (24) du support (17) comportent des branches latérales (26) qui comportent chacune une charnière à bande (41) sur l'une de leurs extrémités, les autres extrémités opposées étant reliées au moyen d'une branche transversale (27) en définissant une perforation (25) entre les branches latérales (26).

6. Boîte encastrable selon la revendication 5, caractérisée en ce que la branche transversale (27) de la languette de maintien (24) est munie de parties de maintien en saillie (28) sur son côté qui coopèrent avec la paroi de limitation de l'évidement (40) de la paroi (39).

7. Boîte encastrable selon la revendication 6, caractérisée en ce que la branche transversale (27) de la languette de maintien (24) comporte une pluralité de parties de maintien (28) en saillie qui sont organisées en deux groupes, ces deux groupes étant séparés l'un de l'autre par une partie bombée (29) disposée au centre.

8. Boîte encastrable selon les revendications 6 et 7, caractérisée en ce que le bord de limitation extérieur de la branche transversale (27) est de forme incurvée de telle manière que le point central de courbure coïncide avec le point central de la partie centrale (18) du support (17).

9. Boîte encastrable selon les revendications 1 et 3, caractérisée en ce que la partie d'assise (32) du prolongement (30) du support (17) comporte un trou (35) dans sa partie plane centrale (33), pour la pénétration d'un élément de fixation.

10. Boîte encastrable selon une ou plusieurs des revendications précédentes, caractérisée en ce que le prolongement (30) est disposé dans la zone de la partie centrale (18) du support (17) qui se trouve entre les branches latérales (26), ou les charnières à bande (41), des languettes de maintien (24).

11. Boîte encastrable selon les revendications 1 et 2, caractérisée en ce que la partie centrale (18) du support (17) comporte, sur les deux côtés diamétralement opposés, une partie plate (19) dans la région de laquelle se trouve un évidement (20) dont les parois latérales (21) coopèrent, après la mise en place du support (17) avec les parois extérieures de colonne de raccordement (13, 14) de la boîte encastrable (10) afin d'en assurer le positionnement.

12. Boîte encastrable selon la revendication 1, caractérisée en ce que les parties d'assise (46) du support (17) sont composées chacune d'un prolongement (47) et d'une surface d'assise (50) disposée transversalement par rapport à ce dernier, et en ce que les parties d'assise (46) sont susceptibles de se plier par rapport à la partie centrale (18) du support (17) (fig. 8 à 13).

13. Boîte encastrable selon la revendication 12, caractérisée en ce que le prolongement (47) est, d'une part, relié à la partie centrale (18) du support (17) au moyen de la charnière à bande (53) et, d'autre part, comporte une surface d'assise (50) disposée approximativement perpendiculaire à ce dernier.

14. Boîte encastrable selon les revendications 12 et 13, caractérisée par une disposition par paires de deux prolongements (47), qui sont séparés l'un de l'autre par une perforation (48) mais sont reliés à leur extrémité libre au moyen d'une branche (54), cette branche (54) comportant, disposée sur un bord extérieur, deux surfaces d'assise (50) disposées séparées l'une par rapport à l'autre.

15. Boîte encastrable selon une ou plusieurs des revendications précédentes 12 à 14, caractérisée en ce que les prolongements (47) comprennent des parties en saillie (52) de maintien disposées sur l'un de leur côté et de préférence organisées en groupes.

16. Boîte encastrable selon la revendication 12, caractérisée en ce que la partie centrale (18) du support (17) est munie de languettes de maintien (44, 45) qui sont disposées sur des côtés diamétralement opposés et par groupes, chaque groupe étant composé de languettes de maintien (45), respectivement (44), qui sont larges et étroites.

17. Boîte encastrable selon la revendication 16, caractérisée en ce que chaque groupe de languettes de maintien est composé de deux languettes de maintien (45), respectivement (44) étroites et une languette de maintien plus large, les languettes de maintien larges (44) pénétrant dans la perforation (48) entre les prolongements (47), tandis que les languettes de maintien (47) étroites sont disposées latéralement à côté des prolongements (47).

18. Boîte encastrable selon les revendications 1 et 12, caractérisée en ce que les languettes de maintien (24) ou, respectivement (44, 45) et les prolongements (42) ou respectivement, (47), sont formés directement avec les parties d'assise (32) ou, respectivement (50), en éliminant le support (17), sur la surface du pourtour en forme de cylindre creux (11) de la boîte encastrable (10), (fig. 14 à 17).
